# EUROPEAN PATENT SPECIFICATION

(11) **EP 2 697 924 B1**
(45) Date of publication and mention of the grant of the patent: **01.08.2018**
(21) Application number: 12723910.1
(22) Date of filing: 12.04.2012
(51) Int. Cl.: H04L 5/00

(54) **SENSING CONFIGURATION IN CARRIER AGGREGATION SCENARIOS**
BELEGUNGDETEKTIONKONFIGURATION IN TRÄGERAGGREGATIONSSZENARIEN
CONFIGURATION DE DÉTECTION D'OCCUPATION DANS DES SCÉNARIOS D'AGRÉGATION DE PORTEUSES

(30) Priority: 12.04.2011 GB 201106193; 12.04.2011 US 201113084941; 06.10.2011 US 201113267571
(43) Date of publication of application: 19.02.2014
(73) Proprietor: Xiaomi H.K. Limited, Wanchai (HK)
(72) Inventor: KOSKELA, Timo, FI-90120 Oulu (FI); HAKOLA, Sami, FI-90450 Kempele (FI); TURTINEN, Samuli, FI-91100 Ii (FI)
(74) Representative: EIP
(86) International application number: PCT/IB2012/051802
(87) International publication number: WO 2012/140599

(56) References cited:
- WO-A1-2010/121708
- WO-A2-2011/038252
- TEXAS INSTRUMENTS: "Downlink and Uplink Control to Support Carrier Aggregation", 3GPP DRAFT; R1-092198 TI CARRIER AGGR_R3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. San Francisco, USA; 20090502, 2 May 2009 (2009-05-02), XP050339627, [retrieved on 2009-05-02]
- NOKIA ET AL: "Initial simulations for mobility in carrier aggregation", 3GPP DRAFT; R4-102041, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Montreal, Canada; 20100510, 20 May 2010 (2010-05-20), XP050426978, [retrieved on 2010-05-20]
- SAMSUNG: "Aperiodic CSI triggering in carrier aggregation", 3GPP DRAFT; R1-106028 APERIODIC CSI TRIGGERING IN CARRIER AGGREGATION_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Jacksonville, USA; 20101115, 9 November 2010 (2010-11-09), XP050489526, [retrieved on 2010-11-09]

## Description

### Field of the invention

The present invention relates to sensing configurations in carrier aggregation scenarios. More specifically, the present invention relates to methods and devices configured to sense downlink component carrier resources on shared bands. For the purpose of the present invention, such component carriers may be frequency division duplex (FDD) and/or time divisional duplex (TDD) carriers.

### Background of the Invention

Mobile data transmission and data services are constantly making progress. With the increasing penetration of such services, a need for increased bandwidth for conveying the data is emerging. In hitherto known scenarios, networks operated on reserved bands (licensed bands) within the available spectrum, which were reserved for the particular network. As licensed band operation has been increasingly utilized, portions of the radio spectrum that remain available have become limited. Thus, operators, service providers, communication device manufacturers, and communication system manufacturers, are all seeking efficient solutions to utilize unlicensed shared band operation. Communication on an unlicensed shared band is generally based on sharing an available channel between different communication devices. The different communication devices may utilize a common radio access technology (RAT). However, in certain scenarios, the different communication devices may utilize different RATs. In an unlicensed shared band, channel access can be distributed, where communication devices can detect a channel, and utilize a channel reservation scheme known to other communication devices in order to reserve a right to access the channel. In distributed channel access, a transmitting communication device and a receiving communication device are generally not synchronized to a global reference.

Currently, a system known as Long Term Evolution (LTE) is being further developed. When the LTE system concept is further extended in a way that it can be deployed also on unlicensed bands, the devices and local access points have potentially more spectrum available. That spectrum is to be used opportunistically as explained above. This setting can be considered as a kind of non-contiguous carrier aggregation, in which unlicensed spectrum is used as resources or "ground" for secondary carriers/cells for the licensed spectrum primary and secondary carriers/cells, controlled by the network transceiver station (or access node) known as Evolved Node_B (eNB). One step further would be to deploy an eNB totally on a shared band, like in television white space (TVWS) or in the industrial, scientific and medical, ISM band without any anchor in licensed spectrum (in EUTRAN level) (Evolved Universal Mobile Telecommunications System Terrestrial Radio Access Network) similar to WLAN deployments to make LTE a competing solution against widely adopted IEEE technologies.

As a future LTE Advanced (LTE-A) system may be deployed on unlicensed bands (e.g. TVWS or ISM bands), for example via carrier aggregation methods as mentioned above, the environment of the spectrum sets further requirements/challenges for the system to operate appropriately. One problem in case downlink carrier aggregation is conducted with one or more component carriers (CC) on unlicensed bands, is to specify certain CC(s) to carry the control/scheduling information (on a control channel such as physical downlink control channel (PDCCH)) for a terminal such as a user equipment (UE) device reliably and without service interruptions due to different interference situations of different CCs from a local point of view. Also, from a UE point of view, the experienced interference situation may be quite different from the eNB side due to interference caused by an unknown system (operating in the same unlicensed band). It could be envisioned also that on unlicensed spectrum deployments with carrier aggregation methods, the cross-carrier scheduling option is to be used to improve interference management and protection of crucial control information transmission among eNBs. Furthermore, there may be some regulatory needs for, e.g., periodic sensing / measurements of the channel on unlicensed/shared band. As an example, for 5 GHz ISM band in Europe, there is a tight requirement for sensing radar operations.

Carrier aggregation concepts with cross-carrier scheduling method for LTE Rel-10 are currently being discussed. In current concepts, the cross-carrier scheduling method is UE specific and component carrier specific and is configured via radio resource control (RRC) signaling.

In LTE, the channel quality indicator (CQI) reports are to assist an evolved Node_B, eNB, in selecting an appropriate modulation and coding scheme MCS to use for downlink transmissions. It should be noted that the reported CQI is not a direct indication of signal to interference noise ratio (SINR) but instead, the UE reports the highest MCS that it can decode with a certain block error rate probability. It is also very questionable whether it is possible to recognize interference coming from other system transmissions with CQI feedback since the bad signal quality may be caused by channel fading.

Furthermore in LTE, the serving eNB may configure and request an individual active UE to perform certain Radio Resource Measurement (RRM) measurement and reporting, specified as a dedicated RRC signaling procedure. Furthermore, in-band dynamic channel quality indication from UE, measured on a physical resource block basis in the downlink (DL), and sending sounding signals by UE in the uplink (UL) are also adopted. On shared bands it is also important to carry out sensing/measurements for unknown interference caused by other system utilizing the same spectrum. In LTE system, protection of, e.g., control information carried by certain CC or by all CCs for themselves is crucial for the system to work reliably.

WO 2011/038252 describes a system and method for configuring a component carrier. A component carrier assignment message is received. The component carrier assignment message may be configured to identify the component carrier and include at least one of a downlink carrier frequency, a carrier frequency of a paired uplink carrier, a bandwidth of the component carrier, a bandwidth of the paired uplink carrier, an indication of whether the component carrier is a control channel monitoring component carrier configured to signal data channel assignment information for the component carrier and a logical index of the component carrier. The component carrier assignment message may then be used to configure the component carrier on a user equipment.

WO 2010/121708 describes methods for scheduling of uplink transmission and generating transport blocks according to multiple received uplink assignments. To propose strategies for generating plural transport blocks within a given time constraint, the invention introduces prioritization of the uplink assignments is introduced, so that multiple uplink assignments can be ranked in the mobile terminal in a priority order. The prioritization of the uplink assignments is used to determine the order in which the individual transport blocks corresponding to the uplink assignments are filled, respectively how the data of different logical channels is multiplexed to the transport blocks for transmission in the uplink. Another aspect of the invention is to suggest joint logical channel procedures that operate on virtual transport blocks accumulated from the received uplink assignments. One or more such joint logical channel procedure can be performed in parallel.

SAMSUNG: "Aperiodic CSI triggering in carrier aggregation", 3GPP TSG RAN WG1 #63 - R1-106028 discusses how aperiodic CQIs for cross-carrier scheduled DL CCs can be activated and reported in case aperiodic CQIs for those DL CCs cannot be supported with 1-bit CQI request in DCI format 0, which is defined in LTE, under carrier aggregation with cross-carrier scheduling.

Thus, there is still a need to further improve such systems in terms of proper interference measurements and reports being enabled.

### Summary of the Invention

The invention is set out in the appended claims. The references to embodiments in the description falling outside the scope of the appended claims are to be understood as mere examples which are useful for understanding the invention. Various aspects of examples of the invention are set out in the claims.

According to a first aspect of the present invention, there are provided apparatus for use in controlling an access node or a user equipment as defined in the appended apparatus claims. Advantageous further developments are as set out in respective dependent claims thereof.

According to a second aspect of the present invention, there are provided methods for controlling an access node or a user equipment as defined in the appended method claims. Advantageous further developments are as set out in respective dependent claims thereof.

According to a third aspect of the present invention, there are provided computer readable memories each storing a computer program comprising a set of instructions, which, when executed by an access node or user equipment, cause the access node or user equipment to implement the respective methods as set our herein.

According to embodiments of the present invention, there are provided computer program products each comprising a non-transitory computer-readable storage medium having computer readable instructions stored thereon, the computer readable instructions being executable by a computerized device to cause the computerized device to perform a method for controlling an access node or a user equipment as defined in the appended method claims.

Thus, improvement is achieved by methods, apparatus and computer readable memories enabling sensing / measurements to be conducted on component carriers in communication scenarios adopting a carrier aggregation mode aggregating a primary carrier and at least one secondary carrier. Additional signaling and/or overhead can be avoided while reliable measurements can be carried out and reliable reports can be given.

### Brief description of drawings

For a more complete understanding of embodiments of the present invention, reference is now made to the following descriptions taken in connection with the accompanying drawings in which:
Figure 1 illustrates method steps carried out by and implemented at the network transceiver device, eNB, side;
Figure 2 illustrates method steps carried out by and implemented at the terminal device, UE, side;
Figure 3 illustrates a carrier aggregation scenario with the present invention applied thereto; and
Figure 4 illustrates another carrier aggregation scenario with the present invention applied thereto.

### Detailed Description of the Invention

Aspects of the invention will be described herein below.

It is to be noted that the following description refers to an environment of the LTE system (long term evolution) in which carrier aggregation is deployed on an (at least partly) unlicensed spectrum. However, it is to be understood that this serves for explanatory purposes only. Other systems differing from the LTE system can be adopted as long as they deploy carrier aggregation. Also, the principles outlined herein below in relation to the present invention can be applied to the unlicensed spectrum, or to carrier aggregation in a mixture of licensed and unlicensed spectrums.

Generally, carrier aggregation serves to enhance the bandwidth and/or transmission rate and is primarily deployed on downlink carriers in the frequency division duplex system (FDD), but can also be deployed in relation to a phase of a carrier if a TDD system is concerned (time division duplex). In carrier aggregation, individual carriers are "joined" to form the aggregated carrier so as to benefit from the combined bandwidth thereof. In such carrier aggregation, one carrier is a primary component carrier (PCC) and at least one carrier aggregated with a primary component carrier is referred to as secondary component carrier (SCC). Thus, in a communication configured in carrier aggregation mode, a primary carrier and at least one secondary component carrier are present. With particular reference to the subsequent Figures to be described, the component carrier is identified by time and frequency in which it is present. The bandwidth of a carrier is defined by the amount of the difference between its highest and its lowest frequency in which it operates. In the time domain, a carrier is composed of a sequence of so-called sub-frames. Within a respective sub-frame, control information as well as payload/data is consecutively transmitted. Thus, a sub-frame is composed of a control channel region followed by a shared channel region. Such control channel and shared channel regions are repeated in a subsequent sub-frame. However, different carriers (which are also referred to as component carriers as they constitute a respective component of the carrier aggregation system) may have different bandwidths and also the duration or length of the respective control and/or shared channel regions may vary for different component carriers. Carrier aggregation in connection with the aggregated component carriers is specific for a respective network transceiver device referred to as evolved Node_B, eNB. Terminals UE communicating via the network access the network via the eNB as an access point.

In the following Figures, primary component carriers are denoted by PCC, while secondary component carriers are denoted by SCC followed by an index such as n, k, m, for example. In particular, while at a certain eNB a specific carrier is assigned to serve as a primary component carrier, the same component carrier may be configured as a secondary component carrier at another eNB and/or for another device communicating in carrier aggregation mode. A respective eNB communicates in carrier aggregation mode with one or more terminal devices referred to also as user equipment UE. A user equipment can be a mobile phone, a smart phone or personal computer connectable to a network such as LTE network or other (WCDMA, WIMAX, WLAN or the like) as long as they also make use of carrier aggregation.

Within a control channel portion of a respective sub-frame, control channel elements (CCE) are transmitted. Control channel elements are also referred to as search spaces. That is, a search space may comprise one or more control channel elements and thus carry the information of those elements. Search space also means that the terminal listening to the downlink control channel searches in this part of the carrier (time, frequency/bandwidth) for information that is intended / dedicated for the terminal. The search spaces are user specific in terms of at least their duration and bandwidth, they may vary from sub-frame to sub-frame and each such search space is associated with a respective one of the component carriers and thus carries information that designates the respective component carrier in terms of information used for cross scheduling. That is, the search spaces include "pointers" for the cross scheduling and denote corresponding "search spaces" where the user equipment can find the payload transmitted to the user equipment or terminal in a payload channel portion of a sub-frame in the corresponding (cross-scheduled) component carrier. Cross-scheduled means that information to be delivered to a specific user equipment is scheduled across carriers so that the total of the information is obtained at the terminal upon combining all the information carried in the aggregated carriers. The payload data is for example conveyed using the physical download shared channel PDSCH as an example of a payload channel, while control data are conveyed e.g. in the physical downlink control channel PDCCH.

In at least an embodiment, the eNB configures certain UE devices to perform sensing on empty PDCCH field(s) of certain downlink component carrier(s) operating on shared spectrum. This is accomplished in the following way:
The eNB informs certain UE device(s) via messages such as e.g. Downlink Control Information (DCI) messages or RRC signaling that a sensing is required on certain secondary component carrier(s) cross-scheduled via PCC and/or other SCC(s). The specific information for sensing, e.g., resolution (bandwidth), resources (component carriers) and duration are configured by the network. For the situations where the PDCCH of a component carrier CC in question is used to deliver control information for other UE devices, the network releases some amount of Control Channel Elements (CCEs) for sensing purposes. That is, not all CCEs are sensed but only free CCEs are sensed. For example, in such a scenario, the mapping of the empty CCEs follows the CCE allocation of the UE specific search space in corresponding CC (PCC or SCC) where the scheduling information / sensing configuration is carried out. The reasoning is that the sensing UE device then implicitly derives where to carry out sensing and wouldn't require any additional signaling from eNB to UE device. Furthermore, eNB handles the search space allocations for other UE devices in a manner so as not to overlap with the ones in sensing allocation.

To reduce additional signaling and overhead, UE devices explicitly derive the sensing duration by utilizing the dedicated physical control format indicator channel PCFICH information of control channel duration if transmitted on the cross-scheduled component carriers, i.e., the sensing duration would be equal to the PDCCH duration. Alternatively, a UE uses the PDSCH starting position (as an end for the sensing) which is otherwise signaled via cross-carrier scheduling information.

In at least one embodiment, only UE devices with valid cross-scheduled PDSCH transmission on component carrier to be sensed perform sensing procedure on the quiet (empty) PDCCH field during the corresponding sub-frame. The reasoning is that these UE devices have valid physical uplink control channel (PUCCH) resource grant for corresponding data transmission carried on PDSCH, so that measurement/sensing results can advantageously be reported to the eNB via the PUCCH. The measurement feedback could be indicated in the same PUCCH transmission with a CQI-like feedback method which reduces additional signaling and spare uplink resources since otherwise the network would need to provide dedicated resources for the feedback.

Optionally, a certain threshold level could be provided by the network indicating whether the channel was interfered with or not for straightforward feedback. That is, a report could be sent only if interference exceeds such a threshold.

In at least a further embodiment, the sensing requirement on PDCCH could also be forced by the network to relate also UE devices without incoming PDSCH transmissions. Such sensing could e.g. be triggered by a number of consecutive Negative- Acknowledge (NACK) feedbacks of certain downlink component carrier PDSCH transmission.

Also, before a component carrier CC activation or assignment in carrier aggregation, the proposed sensing method could be configured for self-protection purposes at a UE device.

If considering a situation, e.g., where sensing on some component carrier is needed but the PDCCH region of that component carrier is completely crowded with control message transmissions (there is not a single empty portion available), the following could be considered as an alternative. According to such alternative, the UE/device is configured to carry out sensing on the allocated PDSCH resources. Such scenario, then encompasses a signaling method to change resource allocation for sensing to a sensing order indicated, e.g., in a one bit flag on corresponding DCI message with scheduling information. That is, in an configuration (not shown in the Figures), the sensing order flag "SO" set to zero by the eNB indicates to the UE that sensing is to be performed on the PDCCH of the designated component carrier, while the sensing order flag "SO" set to one indicates that sensing is to be performed on the PDSCH of the designated component carrier.

In at least one embodiment, the sensing/measurement results are utilized in an inter-eNB interference coordination to help decisions for Primary Component Carrier and/or Secondary Component Carrier selections, e.g., to deliver PDCCH and cross-carrier scheduling information for UE devices.

Now, specific reference is made to the drawings and embodiments illustrated therein.

In at least an embodiment, the procedure(s) could be as follows: The eNB configures certain component carriers it operates in for a certain UE device (PCC and SCCs). It configures the UE to listen to cross scheduling information of SCC#n from PCC or SCC#k. (these cross carrier scheduled component carriers may be configured several for a single UE device). When an eNB sends the scheduling information on PCC or SCC#k to a UE via PDCCH's DCI message on a UE specific search space, it may indicate via one or several information bits (new bits) that the UE should perform sensing on a PDCCH region of SCC#n before PDSCH transmission takes place in a corresponding sub-frame. In an alternative embodiment, the eNB configures sensing to be performed on empty PDCCH regions without PDSCH transmission to the UE device in a corresponding sub-frame. The UE sends feedback information of what is sensed/measured. This could be indicated in a message for a valid PUCCH resource of the PDSCH transmission (new information). The eNB needs to allocate separate feedback resources for the alternative case since there is no valid PUCCH resource grant due to no incoming PDSCH transmission. eNB makes some decisions based on sensing information.

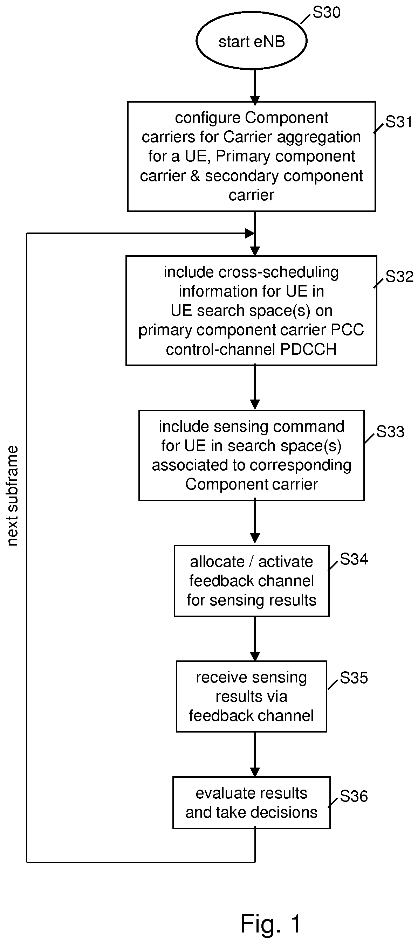

Figure 1 illustrates method steps carried out by and implemented at the network transceiver device side, i.e. at the evolved Node_B, eNB. The process starts in a step S30 at the eNB. In a subsequent step S31, the eNB configures component carriers for carrier aggregation for a specific terminal UE in terms of the primary component carrier and at least one secondary component carrier. Since communication in carrier aggregation mode is carried out sequentially for successive sub-frames, the subsequent step S32 pertains to an initial sub-frame and the eNB includes cross scheduling information for the user equipment in the user equipment specific search space or search spaces on the primary component carrier, i.e. in its control channel (PDCCH if a LTE system is concerned). Thereafter, in a further step S33, the eNB includes a sensing command for the user equipment in one or more search spaces, wherein each of the search spaces is associated with one corresponding component carrier. Also, the eNB allocates and/or activates a feedback channel for the sensing result to be delivered to the eNB from the respective terminal UE. This is done in step S34. Thereafter, the eNB receives in step S35 sensing results via the feedback channel. Thereafter, the eNB evaluates the results and takes a decision thereon. Afterwards, the process loops back to be repeated in the next sub-frame so that for the next sub-frame, the steps S32 to S36 are repeated. Optionally, not shown in Figure 1, the eNB may also collect sensing results for a plurality of sub-frames and only evaluate those results in combination prior to taking any decision dependent thereon.

As derivable from the above, the eNB comprises a communication module configured for communication in a carrier aggregation mode aggregating a primary carrier and at least one secondary carrier. Further, the eNB comprises a control module that is configured to transmit, S32, scheduling information in a control channel of one of the carriers, i.e. of the primary carrier or a secondary carrier via cross carrier scheduling, the scheduling information being associated with a respective one of said aggregated carriers and designating search spaces for payload in a payload channel in said respective aggregated carrier. In addition, the eNB's control module is configured to add, S33, a sensing command to the scheduling information associated with said at least one secondary carrier, which sensing command commands sensing to be performed on said at least one secondary carrier.

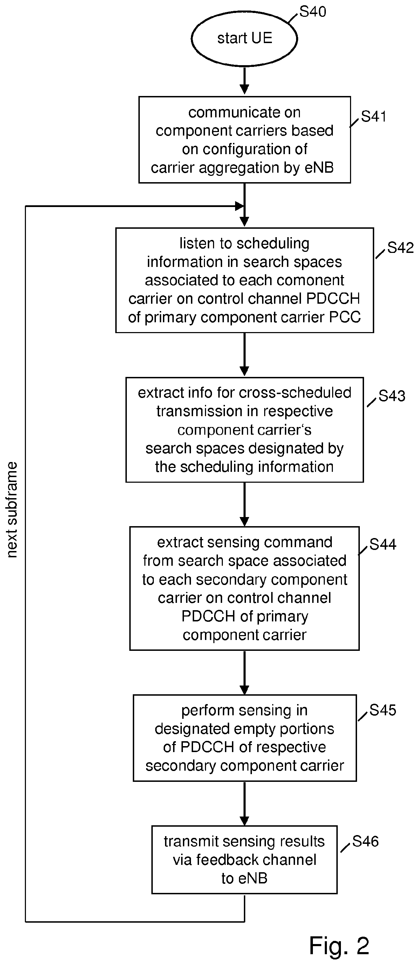

Figure 2 illustrates method steps carried out by and implemented at the terminal device, UE, side. Likewise, the method starts in a step S40 for the user equipment. In a subsequent step S41, the user equipment communicates on component carriers based on the configuration of carrier aggregation as configured by the eNB. Also, as communication is performed sub-frame by sub-frame, in a subsequent step S42 an initial or first sub-frame is concerned and the user equipment listens to scheduling information in the search spaces that are associated with each component carrier on the control channel (PDCCH) of one of the carriers, i.e. the primary component carrier PCC or a secondary component carrier via cross scheduling. Thereafter, in step S43, the user equipment extracts information for the cross-scheduled transmission in respective component carrier's search spaces which are designated by the scheduling information. After this, in step S44, the user equipment extracts the sensing command from the search space associated with each secondary component carrier on the control channel PDCCH of the primary component carrier. Based on this extracted sensing command, the user equipment performs sensing and/or measurement in the designated empty portions of the PDCCH of the respective secondary component carrier in step S45. After having performed the sensing, the user equipment in step S46 transmits the sensing results via the feedback channel to the network transceiver device or evolved Node_B. Thereafter, the flow returns to step S42 so as to be performed for the next sub-frame.

While herein before, the method has been described exemplarily on a functional level with regard to the devices involved in the communication on aggregated carriers, the subsequent description will describe features of the invention with reference to data conveyed on the respective aggregated carriers.

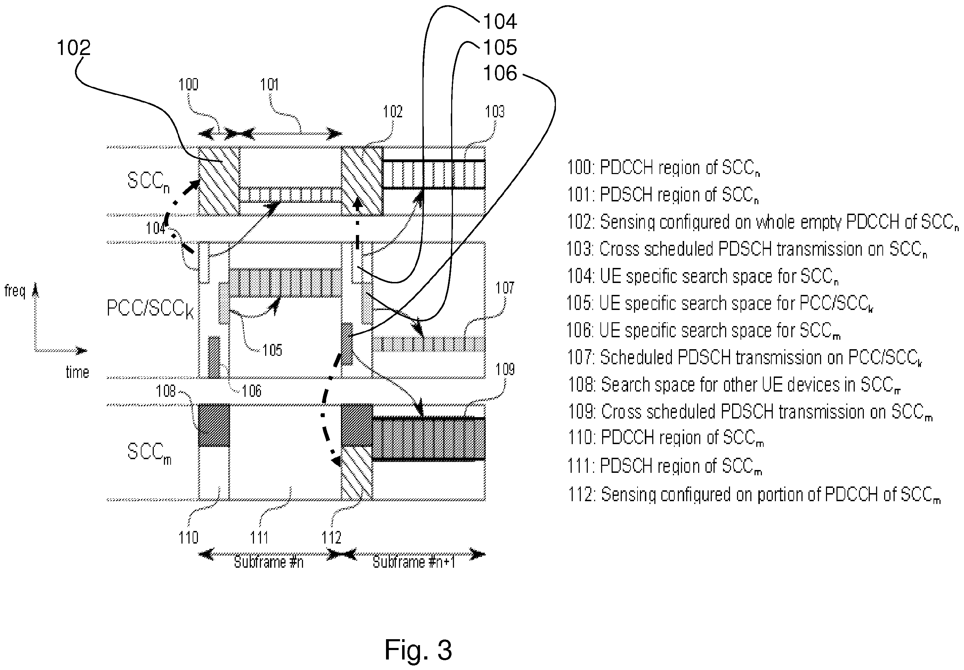

Figure 3 illustrates a carrier aggregation scenario with the present invention being applied thereto. The depicted scenario relates to a single network transceiver device eNB only. Also, the search spaces indicated and sensing spaces indicated pertain mainly to single user equipment. The carrier aggregation is built by the illustrated three component carriers, a primary component carrier PCC and two secondary component carriers SCCₘ and SCCₙ. The primary component carrier PCC can also be denoted as SCCₖ because the same carrier for another user equipment in the coverage of the network transceiver device eNB may be a secondary component carrier. Each carrier is characterized by its bandwidth. Each component carrier may have a different bandwidth compared to other component carriers. Figure 3 illustrates two sub-frames for the aggregated carriers, a sub-frame n as well as a subsequent sub-frame n+1. Each sub-frame is constituted by a control channel region followed by a payload channel region. With reference to the LTE system, the control channel region consists of the PDCCH region while the payload channel region consists of the PDSCH region. Reference numerals 100 and 110, respectively denote the PDCCH region of component carriers SCCₙ and SCCₘ in sub-frame n, respectively. The PDCCH regions of other component carriers are not individually denoted with reference numerals but are believed to be clearly identifiable in the drawing due to their location in the respective sub-frame. With regard to the user equipment communicating via the eNB, in downlink, the eNB transmits in the PDCCH control channel region of the primary component carrier PCC information for the user equipment concerned. The information is carried in user specific control information search spaces. For example, the eNB transmits control information for the UE in search spaces 104, 105, and 106. Numeral 104 denotes the UE specific search space for SCCₙ, 106 denotes the UE specific search space for SCCₘ, and 105 denotes the UE specific search space for PCC/SCCₖ. Within these search spaces, scheduling information is transmitted and the scheduling information is associated with a respective one of said aggregated carriers and designates search spaces for payload in a payload channel of the respective aggregated carrier. This is indicated by the arrows pointing from search space 104 to the hedged portion in the PDSCH region 101 of the SCCₙ, and pointing from search space 105 to the hedged grey region of the PDSCH region of the PCC. Likewise, in the subsequent sub-frame n+1 the search spaces 104, 105 and 106 which for this subsequent sub-frame have a different position within the PDCCH region, carry similar information as illustrated by the corresponding arrows from the PDCCH region of the PCC to the PDSCH regions of SCCₙ, PCC, and SCCₘ. Thus, in other words, the scheduling information in the PDCCH informs the user equipment on which component carrier to listen for payload dedicated for the user equipment. The scheduling information thus denotes the component carrier as well as a bandwidth of the component carrier to be used. Thus, areas 103, 107 and 109 denote cross-scheduled PDSCH transmissions on the respective primary or secondary component carriers. With the present invention implemented, in the scenario depicted in Figure 3, a sensing command is added to the scheduling information in the search space 104 for sub-frame n and correspondingly for sub-frame n+1. The sensing command commands the user equipment to perform sensing on at least one secondary carrier, that is in the present scenario since the user equipment specific search space 104 contains information designating the search space for payload in the aggregated secondary carrier SCCₙ, the sensing command added to that scheduling information commands sensing to be performed on the secondary carrier SCCₙ. This is illustrated by the additional arrow pointing from field 104 to field 102 in the SCCₙ. That is, field 102 denotes that sensing is configured for the user equipment on the entire empty PDCCH region 100 of the secondary component carrier SCCₙ. For SCCₙ, this is valid for both sub-frames, n and n+1. Since the search space 106 is the search space carrying information relating to the secondary component carrier SCCₘ and in sub-frame n there is no information "pointing" to search spaces in the PDSCH region, there is no sensing performed in the PDCCH region of SCCₘ in sub-frame n. Thus, field 110 is "empty" without sensing being configured for this region. In sub-frame n, however, the PDCCH region of sub-frame n contains a search space 108. 108 however, denotes the search space for another UE device in this secondary component carrier. Although the search space for the other UE device or devices is denoted as a single block, the search space could also be partitioned like the search spaces 104, 105, 106 in the PCC. However, the illustration is serving for explanatory purposes only so that the illustration was intended to be kept simple. In sub-frame n+1 however, the search space 106 contains information pointing to the cross-scheduled transmission on the PDSCH for the user equipment on the secondary component carrier SCCₘ, as indicated by 109. Therefore, field 106 in sub-frame n+1 also has a sensing command added thereto, which instructs the user equipment to perform sensing on said secondary carrier SCCₘ, more particularly on the empty portion of the PDCCH of SCCₘ, denoted by 112.

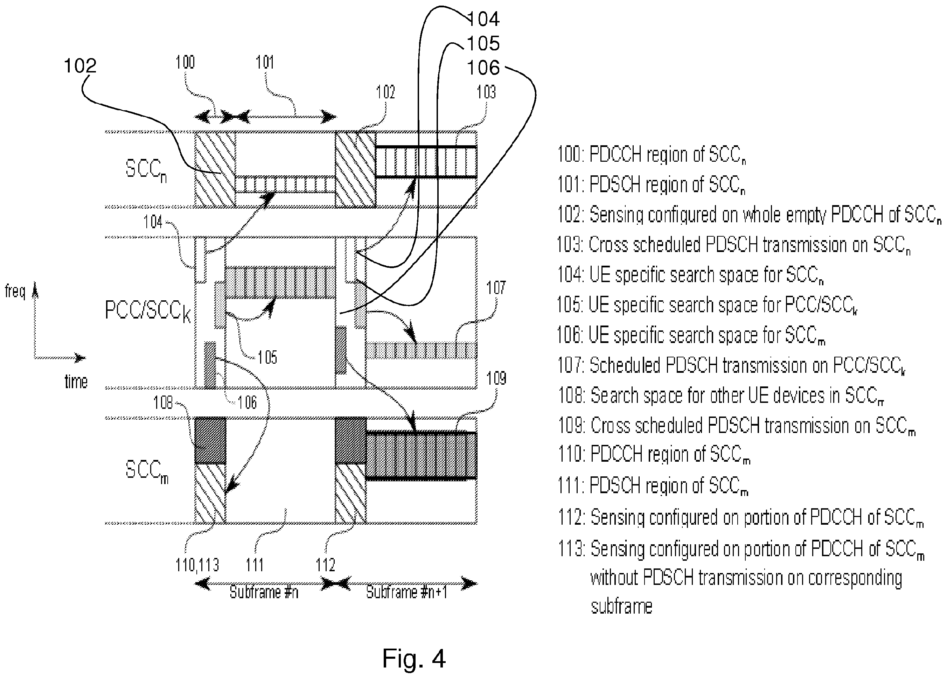

Figure 4 depicts a similar scenario to Figure 3 so that a detailed description thereof is not repeated here. However, in sub-frame n of Figure 4, the search space 106 including information for the secondary component carrier SCCₘ, although not including information pointing to search spaces in the PDSCH of SCCₘ includes a sensing command associated with said secondary carrier SCCₘ. Thus, the search space 106 contains the sensing command to instruct the user equipment to perform sensing on the configured portion of the PDCCH of SCCₘ even without a transmission scheduled to take place on the PDSCH in this sub-frame n on SCCₘ. This is indicated by the region 113 in Figure 4 and the arrow pointing from search space 106 to regions 110, 113.

Generally, the invention is implemented in an environment such as an LTE system adopting carrier aggregation. Embodiments of the invention are represented by methods and/or correspondingly configured devices such as eNBs and/or UEs. More specifically, the invention generally relates to modem modules of such devices. Other systems can benefit also from the principles presented herein as long as they have identical or similar properties like the carrier aggregation under LTE.

Embodiments of the present invention may be implemented in software, hardware, application logic or a combination of software, hardware and application logic. The software, application logic and/or hardware generally, but not exclusively, may reside on the devices' modem module. In an example embodiment, the application logic, software or an instruction set is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer or smart phone, or user equipment.

The present invention relates in particular but without limitation to mobile communications, for example to environments under LTE, WCDMA, WIMAX and WLAN and can advantageously be implemented in user equipments or smart phones, or personal computers connectable to such networks. That is, it can be implemented as/in chipsets to connected devices, and/or modems thereof.

If desired, the different functions discussed herein may be performed in a different order and/or concurrently with each other. Furthermore, if desired, one or more of the above-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the above describes example embodiments of the invention, these descriptions should not be viewed in a limiting sense. Rather, there are several variations and modifications which may be made without departing from the scope of the present invention as defined in the appended claims.

The present invention proposes methods, devices and computer program products in relation to a communication module configured for communication in a carrier aggregation mode aggregating a primary carrier and at least one secondary carrier. Scheduling information is carried in a control channel of one of the carriers, the scheduling information being associated with a respective one of said aggregated carriers and designating search spaces for payload in a payload channel of said respective aggregated carrier. Sensing is performed responsive to a sensing command added to the scheduling information associated with said at least one secondary carrier, which sensing command commands sensing to be performed on said at least one secondary carrier.

### List of acronyms, abbreviations and definitions

- CA: Carrier Aggregation
- CC: Component Carrier
- CCE: Control Channel Elements
- DL: Downlink
- eNB: Evolved Node B
- FDD: Frequency Division Duplex
- ISM: Industrial, Scientific and Medical
- PDCCH: Physical Downlink Control Channel
- PDSCH: Physical Downlink Shared Channel
- RAT: Radio Access Technology
- TVWS: TV White Space
- UE: User Equipment
- UL: Uplink
- LTE: Long Term Evolution
- EUTRAN: Evolved Universal Terrestrial Radio Access Network
- WLAN: Wireless Local Area Network
- IEEE: Institute of Electrical and Electronics Engineers
- CQI: Channel Quality Indication
- RRC: Radio Resource Control
- RRM: Radio Resource Management
- MCS: Modulation and Coding Scheme
- SINR: Signal-to-Interference-and-Noise-Ratio
- DCI: Downlink Control Information
- PCC: Primary Component Carrier
- SCC: Secondary Component Carrier

## Claims

1. Apparatus for use in controlling an access node, comprising:
a communication module configured (S31) for communication in a carrier aggregation mode aggregating a primary carrier and at least one secondary carrier; and
a control module, configured to transmit (S32) scheduling information in a control channel of one of the carriers, the scheduling information being associated with a respective one of said secondary carriers;
wherein the control module is configured to add (S33) a sensing command to the scheduling information associated with said secondary carrier, and wherein the sensing command commands sensing for unknown interference caused by another system utilizing the same spectrum to be performed on said secondary carrier;
**characterized in that**:
said sensing command commands sensing to be performed on an empty portion of the control channel of said secondary carrier, which is complementary to those portions of said control channel of the secondary carrier to which scheduling information is allocated; and
said sensing command commands sensing to be performed on the allocated downlink shared data channel of said secondary carrier, if there is no empty portion available on the control channel of said secondary carrier.

2. Apparatus according to claim 1, wherein said sensing command indicates at least one of the bandwidth in which sensing is to be performed and the duration for which sensing is to be performed on said secondary carrier.

3. Apparatus according to claim 1 or claim 2, wherein said sensing command is added as an extension of bits to an existing control information field.

4. Apparatus according to any preceding claim, wherein said scheduling information is transmitted in a control channel of the primary carrier or in a control channel of a secondary carrier via cross carrier scheduling.

5. Apparatus for use in controlling a user equipment, comprising:
a communication module configured (S41) for communication in a carrier aggregation mode aggregating a primary carrier and at least one secondary carrier; and
a control module, configured to receive (S42) scheduling information in a control channel of one of the carriers, the scheduling information being associated with a respective one of said secondary carriers;
wherein the control module is configured to perform (S45) sensing responsive to a sensing command added to the scheduling information associated with said secondary carrier, and wherein the sensing command commands sensing for unknown interference caused by another system utilizing the same spectrum to be performed on said secondary carrier;
**characterized in that**:
said sensing command commands sensing to be performed on an empty portion of the control channel of said secondary carrier, which is complementary to those portions of said control channel of the secondary carrier to which scheduling information is allocated; and
said sensing command commands sensing to be performed on the allocated downlink shared data channel of said secondary carrier, if there is no empty portion available on the control channel of said secondary carrier.

6. Apparatus according to claim 5, wherein said sensing command indicates at least one of the bandwidth in which sensing is to be performed and the duration for which sensing is to be performed on said secondary carrier.

7. Apparatus according to any of claims 5 and 6, wherein said sensing command is added as an extension of bits to an existing control information field.

8. Apparatus according to any of claims 5 to 7, wherein said scheduling information is received in a control channel of the primary carrier or in a control channel of a secondary carrier via cross carrier scheduling.

9. A method for controlling an access node, the method comprising:
communicating (S31) in a carrier aggregation mode aggregating a primary carrier and at least one secondary carrier;
transmitting (S32) scheduling information in a control channel of one of the carriers, the scheduling information being associated with a respective one of said secondary carriers; and
adding (S33) a sensing command to the scheduling information associated with said secondary carrier, and wherein the sensing command commands sensing for unknown interference caused by another system utilizing the same spectrum to be performed on said secondary carrier;
**characterized in that**:
said sensing command commands sensing to be performed on an empty portion of the control channel of said secondary carrier, which is complementary to those portions of said control channel of the secondary carrier to which scheduling information is allocated; and
said sensing command commands sensing to be performed on the allocated downlink shared data channel of said secondary carrier, if there is no empty portion available on the control channel of said secondary carrier.

10. A method for controlling a user equipment, the method comprising:
communicating (S41) in a carrier aggregation mode aggregating a primary carrier and at least one secondary carrier;
receiving (S42) scheduling information in a control channel of one of the carriers, the scheduling information being associated with a respective one of said secondary carriers; and
performing (S45) sensing responsive to a sensing command added to the scheduling information associated with said secondary carrier, and wherein the sensing command commands sensing for unknown interference caused by another system utilizing the same spectrum to be performed on said secondary carrier;
**characterized in that**:
said sensing command commands sensing to be performed on an empty portion of the control channel of said secondary carrier, which is complementary to those portions of said control channel of the secondary carrier to which scheduling information is allocated; and
said sensing command commands sensing to be performed on the allocated downlink shared data channel of said secondary carrier, if there is no empty portion available on the control channel of said secondary carrier.

11. A computer readable memory storing a computer program comprising a set of instructions, which, when executed by an access node, cause the access node to perform a method according to claim 9 or, when executed by a user equipment, cause the user equipment to perform a method according to claim 10.

## Patentansprüche

1. Vorrichtung zur Verwendung beim Steuern eines Zugangsknotens, die aufweist:
ein Kommunikationsmodul, das für eine Kommunikation in einem Trägeraggregationsmodus angepasst (S31) ist, der einen primären Träger und wenigstens einen sekundären Träger aggregiert; und
ein Steuermodul, das angepasst ist, Zeitplaninformationen in einem Steuerkanal eines der Träger zu senden (S32), wobei die Zeitplaninformationen mit einem entsprechenden von besagten sekundären Trägern assoziiert sind;
wobei das Steuermodul angepasst ist, den Zeitplaninformationen einen Abtastbefehl hinzuzufügen (S33), der mit besagtem sekundären Träger assoziiert ist, und wobei der Abtastbefehl ein auf besagtem sekundären Träger durchzuführendes Abtasten nach unbekannten Interferenzen befiehlt, die von einem anderen System hervorgerufen werden, das das gleiche Spektrum benutzt;
**dadurch gekennzeichnet, dass**:
besagter Abtastbefehl ein auf einem leeren Teil des Steuerkanals von besagtem sekundären Träger durchzuführendes Abtasten befiehlt, wobei der leere Teil komplementär zu jenen Teilen von besagtem Steuerkanal des sekundären Trägers ist, welchen Zeitplaninformationen zugeteilt werden; und
besagter Abtastbefehl ein auf dem zugeteilten gemeinsamen Downlink-Datenkanal des sekundären Trägers durchzuführendes Abtasten befiehlt, wenn auf dem Steuerkanal von besagtem sekundären Träger kein leerer Teil verfügbar ist.

2. Vorrichtung gemäß Anspruch 1, wobei besagter Abtastbefehl wenigstens eine von der Bandbreite, in der ein Abtasten durchgeführt werden soll, und der Dauer, für die ein Abtasten auf besagtem sekundären Träger durchgeführt werden soll, angibt.

3. Vorrichtung gemäß Anspruch 1 oder Anspruch 2, wobei besagter Abtastbefehl als eine Erweiterung von Bits zu einem existierenden Steuerinformationenfeld hinzugefügt wird.

4. Vorrichtung gemäß einem der vorangehenden Ansprüche, wobei besagte Zeitplaninformationen in einem Steuerkanal des primären Trägers oder in einem Steuerkanal eines sekundären Trägers über eine trägerübergreifende Zeitplanung gesendet werden.

5. Vorrichtung zur Verwendung beim Steuern einer Nutzerausstattung, die aufweist:
ein für eine Kommunikation in einem Trägeraggregationsmodus angepasstes (S41) Kommunikationsmodul, das einen primären Träger und wenigstens einen sekundären Träger aggregiert; und
ein Steuermodul, das angepasst ist, Zeitplaninformationen in einem Steuerkanal eines der Träger zu empfangen (S42), wobei die Zeitplaninformationen mit einem entsprechenden von besagten sekundären Trägern assoziiert sind;
wobei das Steuermodul angepasst ist, in Antwort auf einen Abtastbefehl, der zu den mit besagtem sekundären Träger assoziierten Zeitplaninformationen hinzugefügt wurde, ein Abtasten durchzuführen (S45), und wobei der Abtastbefehl ein auf besagtem sekundären Träger durchzuführendes Abtasten nach unbekannten Interferenzen befiehlt, die von einem anderen System hervorgerufen werden, das das gleiche Spektrum benutzt;
**dadurch gekennzeichnet, dass**:
besagter Abtastbefehl ein auf einem leeren Teil des Steuerkanals von besagtem sekundären Träger durchzuführendes Abtasten befiehlt, wobei der leere Teil komplementär zu jenen Teilen von besagtem Steuerkanal des sekundären Trägers ist, welchen Zeitplaninformationen zugeteilt werden; und
besagter Abtastbefehl ein auf dem zugeteilten gemeinsamen Downlink-Datenkanal des sekundären Trägers durchzuführendes Abtasten befiehlt, wenn auf dem Steuerkanal von besagtem sekundären Träger kein leerer Teil verfügbar ist.

6. Vorrichtung gemäß Anspruch 5, wobei besagter Abtastbefehl wenigstens eine von der Bandbreite, in der ein Abtasten durchgeführt werden soll, und der Dauer, für die ein Abtasten auf besagtem sekundären Träger durchgeführt werden soll, angibt.

7. Vorrichtung gemäß einem der Ansprüche 5 und 6, wobei besagter Abtastbefehl als eine Erweiterung von Bits zu einem existierenden Steuerinformationenfeld hinzugefügt wird.

8. Vorrichtung gemäß einem der Ansprüche 5 bis 7, wobei besagte Zeitplaninformationen in einem Steuerkanal des primären Trägers oder in einem Steuerkanal eines sekundären Trägers über eine trägerübergreifende Zeitplanung empfangen werden.

9. Ein Verfahren zum Steuern eines Zugangsknotens, wobei das Verfahren aufweist:
Kommunizieren (S31) in einem Trägeraggregationsmodus, der einen primären Träger und wenigstens einen sekundären Träger aggregiert;
Senden (S32) von Zeitplaninformationen in einem Steuerkanal eines der Träger, wobei die Zeitplaninformationen mit einem entsprechenden von besagten sekundären Trägern assoziiert sind; und
Hinzufügen (S33) eines Abtastbefehls zu den Zeitplaninformationen, die mit besagtem sekundären Träger assoziiert sind, und wobei der Abtastbefehl ein auf besagtem sekundären Träger durchzuführendes Abtasten nach unbekannten Interferenzen befiehlt, die von einem anderen System hervorgerufen werden, das das gleiche Spektrum benutzt;
**dadurch gekennzeichnet, dass**:
besagter Abtastbefehl ein auf einem leeren Teil des Steuerkanals von besagtem sekundären Träger durchzuführendes Abtasten befiehlt, wobei der leere Teil komplementär zu jenen Teilen von besagtem Steuerkanal des sekundären Trägers ist, welchen Zeitplaninformationen zugeteilt werden; und
besagter Abtastbefehl ein auf dem zugeteilten gemeinsamen Downlink-Datenkanal des sekundären Trägers durchzuführendes Abtasten befiehlt, wenn auf dem Steuerkanal von besagtem sekundären Träger kein leerer Teil verfügbar ist.

10. Ein Verfahren zum Steuern einer Nutzerausstattung, wobei das Verfahren aufweist:
Kommunizieren (S41) in einem Trägeraggregationsmodus, der einen primären Träger und wenigstens einen zweiten Träger aggregiert;
Empfangen (S42) von Zeitplaninformationen in einem Steuerkanal eines der Träger, wobei die Zeitplaninformationen mit einem entsprechenden der sekundären Träger assoziiert sind; und
Durchführen (S45) eines Abtastens in Antwort auf einen Abtastbefehl, der zu den Zeitplaninformationen hinzugefügt wurde, die mit besagtem sekundären Träger assoziiert sind, und wobei der Abtastbefehl ein auf besagtem sekundären Träger durchzuführendes Abtasten nach unbekannten Interferenzen befiehlt, die von einem anderen System hervorgerufen werden, das das gleiche Spektrum benutzt;
**dadurch gekennzeichnet, dass**:
besagter Abtastbefehl ein auf einem leeren Teil des Steuerkanals von besagtem sekundären Träger durchzuführendes Abtasten befiehlt, wobei der leere Teil komplementär zu jenen Teilen von besagtem Steuerkanal des sekundären Trägers ist, welchen Zeitplaninformationen zugeteilt werden; und
besagter Abtastbefehl ein auf dem zugeteilten gemeinsamen Downlink-Datenkanal des sekundären Trägers durchzuführendes Abtasten befiehlt, wenn auf dem Steuerkanal von besagtem sekundären Träger kein leerer Teil verfügbar ist.

11. Ein computerlesbarer Speicher, der ein Computerprogramm speichert, das eine Menge von Anweisungen aufweist, die, wenn von einem Zugangsknoten ausgeführt, den Zugangsknoten veranlassen, ein Verfahren gemäß Anspruch 9 durchzuführen oder, wenn ausgeführt von einer Nutzerausstattung, die Nutzerausstattung veranlassen, ein Verfahren gemäß Anspruch 10 durchzuführen.

## Revendications

1. Appareil pour utilisation dans la commande d'un noeud d'accès, comprenant :
un module de communication configuré (S31) pour communication dans un mode d'agrégation de porteuses agrégeant une porteuse principale et au moins une porteuse secondaire ; et
un module de commande, configuré pour transmettre (S32) des informations de planification dans un canal de commande d'une des porteuses, les informations de planification étant associées à une desdites porteuses secondaires respectives ;
dans lequel le module de commande est configuré pour ajouter (S33) une instruction de détection aux informations de planification associées à ladite porteuse secondaire, et l'instruction de détection donnant l'instruction que soit réalisée la détection d'interférence inconnue provoquée par un autre système utilisant le même spectre sur ladite porteuse secondaire ;
**caractérisé en ce que** :
ladite instruction de détection donne l'instruction que soit réalisée la détection sur une partie vide du canal de commande de ladite porteuse secondaire, qui est complémentaire aux parties dudit canal de commande de la porteuse secondaire auxquelles les informations de planification sont attribuées ; et
ladite instruction de détection donne l'instruction que soit réalisée la détection sur le canal de données partagé de transmission en liaison descendante attribué, s'il n'y a pas de partie vide disponible sur le canal de commande de ladite porteuse secondaire.

2. Appareil selon la revendication 1, dans lequel ladite instruction de détection indique au moins l'une de la largeur de bande dans laquelle la détection doit être réalisée, et de la durée pour laquelle la détection doit être réalisée sur ladite porteuse secondaire.

3. Appareil selon la revendication 1 ou la revendication 2, dans lequel ladite instruction de détection est ajoutée en tant qu'extension de bits à un champ d'informations de commande existant.

4. Appareil selon l'une quelconque des revendications précédentes, dans lequel lesdites informations de planification sont transmises dans un canal de commande de la porteuse principale ou dans un canal de commande d'une porteuse secondaire par le biais d'une planification inter-porteuses.

5. Appareil destiné à une utilisation dans la commande d'un équipement utilisateur, comprenant :
un module de communication configuré (S41) pour communication dans un mode d'agrégation de porteuses agrégeant une porteuse principale et au moins une porteuse secondaire ; et
un module de commande, configuré pour recevoir (S42) des informations de planification dans un canal de commande d'une des porteuses, les informations de planification étant associées à une desdites porteuses secondaires respectives ;
dans lequel le module de commande est configuré pour réaliser (S45) une détection en réponse à une instruction de détection ajoutée aux informations de planification associées à ladite porteuse secondaire, et l'instruction de détection donnant l'instruction que soit réalisée la détection d'interférence inconnue provoquée par un autre système utilisant le même spectre sur ladite porteuse secondaire ;
**caractérisé en ce que** :
ladite instruction de détection donne l'instruction que soit réalisée la détection sur une partie vide du canal de commande de ladite porteuse secondaire, qui est complémentaire aux parties dudit canal de commande de la porteuse secondaire auxquelles les informations de planification sont attribuées ; et
ladite instruction de détection donne l'instruction que soit réalisée la détection sur le canal de données partagé de transmission en liaison descendante attribué, s'il n'y a pas de partie vide disponible sur le canal de commande de ladite porteuse secondaire.

6. Appareil selon la revendication 5, dans lequel ladite instruction de détection indique au moins l'une de la largeur de bande dans laquelle la détection doit être réalisée, et de la durée pour laquelle la détection doit être réalisée sur ladite porteuse secondaire.

7. Appareil selon l'une quelconque des revendications 5 et 6, dans lequel ladite instruction de détection est ajoutée en tant qu'extension de bits à un champ d'informations de commande existant.

8. Appareil selon l'une quelconque des revendications 5 à 7, dans lequel lesdites informations de planification sont reçues dans un canal de commande de la porteuse principale ou dans un canal de commande d'une porteuse secondaire par le biais d'une planification inter-porteuses.

9. Procédé pour commander un noeud d'accès, le procédé consistant à :
communiquer (S31) dans un mode d'agrégation de porteuses agrégeant une porteuse principale et au moins une porteuse secondaire ;
transmettre (S32) des informations de planification dans un canal de commande d'une des porteuses, les informations de planification étant associées à une desdites porteuses secondaires respectives ; et
ajouter (S33) une instruction de détection aux informations de planification associées à ladite porteuse secondaire, et l'instruction de détection donnant l'instruction que soit réalisée la détection d'interférence inconnue provoquée par un autre système utilisant le même spectre sur ladite porteuse secondaire ;
**caractérisé en ce que** :
ladite instruction de détection donne l'instruction que soit réalisée la détection sur une partie vide du canal de commande de ladite porteuse secondaire, qui est complémentaire aux parties dudit canal de commande de la porteuse secondaire auxquelles les informations de planification sont attribuées ; et
ladite instruction de détection donne l'instruction que soit réalisée la détection sur le canal de données partagé de transmission en liaison descendante attribué, s'il n'y a pas de partie vide disponible sur le canal de commande de ladite porteuse secondaire.

10. Procédé pour commander un équipement utilisateur, le procédé consistant à :
communiquer (S41) dans un mode d'agrégation de porteuses agrégeant une porteuse principale et au moins une porteuse secondaire ;
recevoir (S42) des informations de planification dans un canal de commande d'une des porteuses, les informations de planification étant associées à une desdites porteuses secondaires respectives ; et
réaliser (S45) une détection en réponse à une instruction de détection ajoutée aux informations de planification associées à ladite porteuse secondaire, et l'instruction de détection donnant l'instruction que soit réalisée la détection d'interférence inconnue provoquée par un autre système utilisant le même spectre sur ladite porteuse secondaire ;
**caractérisé en ce que** :
ladite instruction de détection donne l'instruction que soit réalisée la détection sur une partie vide du canal de commande de ladite porteuse secondaire, qui est complémentaire aux parties dudit canal de commande de la porteuse secondaire auxquelles les informations de planification sont attribuées ; et
ladite instruction de détection donne l'instruction que soit réalisée la détection sur le canal de données partagé de transmission en liaison descendante attribué de ladite porteuse secondaire, s'il n'y a pas de partie vide disponible sur le canal de commande de ladite porteuse secondaire.

11. Mémoire pouvant être lue par ordinateur stockant un programme informatique comprenant un jeu d'instructions, qui, lorsqu'il est exécuté par un noeud d'accès, amène le noeud d'accès à mettre en oeuvre un procédé selon la revendication 9 ou, lorsqu'il est exécuté par un équipement utilisateur, amène l'équipement utilisateur à mettre en oeuvre un procédé selon la revendication 10.
